(19) Europäisches Patentamt
European Patent Office
Office européen des brevets

(11) Publication number: **0 273 148**
**A2**

(12) **EUROPEAN PATENT APPLICATION**

(21) Application number: **87116434.9**

(22) Date of filing: **06.11.87**

(51) Int. Cl.[4]: **C08L 67/02**, C08K 3/34, //(C08L67/02,67:02,71:04,81:06, 79:08,7:00)

(30) Priority: **30.12.86 US 947659**

(43) Date of publication of application: **06.07.88 Bulletin 88/27**

(84) Designated Contracting States: **DE FR GB IT NL**

(71) Applicant: **GENERAL ELECTRIC COMPANY**
**1 River Road**
**Schenectady New York 12305(US)**

(72) Inventor: **Minnick, Michael Gerald**
**436 Lawrence Drive**
**Mt. Vernon Indiana 47620(US)**

(74) Representative: **Sieb, Rolf, Dr. et al**
**General Electric - Deutschland**
**Patentabteilung Praunheimerlandstrasse 50**
**D-6000 Frankfurt/Main(DE)**

(54) **Nucleated poly (cyclohexanedimethanol terephthalate) molding compositions.**

(57) Molding compositions comprising poly(cyclohexanedimethanol terephthalate), 1% to 10% of a crystallization promoting agent selected from talc and surface-treated clay optionally with a second amorphous or semicrystalline polymer, and optionally reinforced, are disclosed. These compositions are characterized by substantially higher Tcc values, reduced cycling times and improved moldability for processing into molded articles.

EP 0 273 148 A2

# NUCLEATED POLY(CYCLOHEXANEDIMETHANOL TEREPHTHALATE) MOLDING COMPOSITIONS

This invention relates to molding compositions comprising a poly(cyclohexanedimethanol terephthlate) resin and a crystallization promoting agent for enhancing recrystallization of the polymer.

## BACKGROUND OF THE INVENTION

Poly(cyclohexanedimethanol terephthalate) or PCT is a polyester derived from cyclohexanedimethanol and a hexacarbocyclic dicarboxylic acid, e.g., terephthalic acid. As a potential resin to be employed in molding compositions, PCT is slow crystallizing. In general, blends of PCT are known to produce low Tcc values and high Tch values, as measured for example, by differential scanning calorimety (DSC). Such values taken together are indicative of slow recrystallization rates and hence, poor processability and suitability of PCT resins in moldable compositions.

Several avenues have been explored to increase the crystallization of PCT blends and thus their suitability as moldable materials.

In U.S. 4,336,343, Aharoni describes a molding composition comprising a polyester resin, e.g., poly-(ethylene terephthalate), PET, poly(butylene terephthalate), PBT or PCT, and sodium citrate as a nucleating agent. In Col. 5, lines 44-46, one is cautioned that large amounts of sodium citrate [nucleating agent] may adversely affect properties of the composition other than the crystallization temperatures.

In Scott et al., U.S. 4,125,571, thermoplastic compositions comprising a combination of PBT and PCT are disclosed. Articles molded from these compositions demonstrate low warpage and good impact strength but in none of the examples is PCT used as the sole polyester resin nor are any nucleating agents employed to increase the recrystallization rate of PCT.

In U.K. Specification No. 1,241,214, published August 4, 1971, there are disclosed shaped articles made by injection molding a PCT resin and inorganic nucleating agents, e.g., talc or china clay, as well as polymeric substances, such as poly(4-methyl pentene) or copolymers of ethylene and acrylic acid. This patent teaches at page 2, lines 22-24 that a minor amount of nucleating agent in the range of only 0.05% to 0.4% by weight, calculated on the polyester is required (page 2, lines 22-24) to accelerate crystal formation. Such low amounts are entirely conventional.

In contrast to the teachings of the aforementioned Great Britain and Aharoni patents, it has now been found quite unexpectedly more than minor amounts, in fact, substantially significant amounts of a crystallization promoting agent of at least 1% to about 10% by weight and preferably in the case of solids, 5% by weight, contribute to faster recrystallization rates, better processability, i.e., reduced cycle time and improved physical properties in articles molded from PCT based blends, e.g., higher distortion temperature under load (DTUL). These advantages which stem from using such significant amounts of a crystallization promoting agent are in no way taught or suggested by the state of the art nor would they have been discoverable by mere routine optimization experiments. Too little of the crystallization promoting agent, as is taught in the art, has been found after numerous experiments to result in poor recrystallization rates and processability. Although too much diminishes the desired properties in the finished articles, even 10% can be used. In one embodiment, reinforced compositions of PCT may also be modified by the addition of amorphous or semicrystalline resins and subsequently molded into useful articles.

## SUMMARY OF THE INVENTION

Provided in accordance with the present invention are improved thermoplastic molding compositions comprising:

(a) a polyester resin derived from cyclohexanedimethanol and a hexacarbocyclic dicarboxylic acid optionally in combination with

(b) an amorphous or semi-crystalline resin, optionally in combination with a reinforcing amount of

(c) a reinforcing agent, the improvement comprising said composition containing at least one

(d) crystallization promoting agent selected from talc, clay, or a mixture of them in an amount effective to cause rapid crystallization of said composition from the melt.

Also provided are compositions as described above but further defined wherein component (a) comprises from about 35 to about 99 parts by weight, component (b) comprises from about 0 to about 30 parts by weight, component (c) comprises from about 0 to about 60 parts by weight, and component (d)

comprises from about 1 to about 10 parts by weight, based on 100 parts of (a), (b), (c) and (d) combined.

Also contemplated by this invention are thermoplastic molding compositions as described above but further defined wherein component (a) comprises from about 40 to about 89 parts by weight, component (c) comprises from about 10 to about 60 parts by weight, and component (d) comprises from about 1 to about 10 parts by weight, based on 100 parts by weight of (a), (c) and (d) combined.

Further contemplated are a thermoplastic molding composition as defined above wherein component (a) comprises from about 99 to about 90 parts by weight, and component (d) comprises from about 1 to about 10 parts by weight, based on 100 parts by weight of (a) and (d) combined.

## DETAILED DESCRIPTION OF THE INVENTION

Useful as component (a) in accordance with the invention herein are the polyesters derived from cyclohexanedimethanol which are prepared by condensing either the cis-or trans-isomer (or a mixture thereof) of, for example, 1,4-cyclohexanedimethanol with a hexacarbocyclic dicarboxylic acid so as to produce a polyester having recurring units having the following formula:

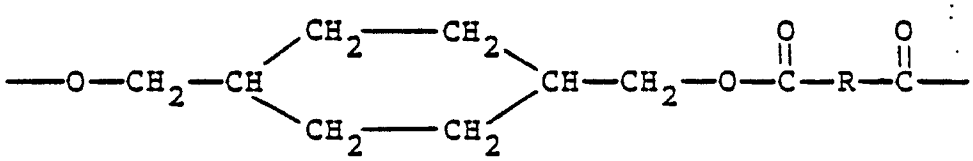

(I)

wherein the substituted cyclohexane ring is selected from the group consisting of the cis-and trans-isomers thereof and R represents an organic radical containing from 6 to 20 carbon atoms which is the decarboxylated residue derived from a hexanecarbocyclic dicarboxylic acid.

The preferred polyester resins may be derived from the reaction of a mixture of the cis-or trans-isomers of 1,4-cyclohexanedimethanol with a mixture of isoand terephthalic acid. These polyesters have recurring units of the formula:

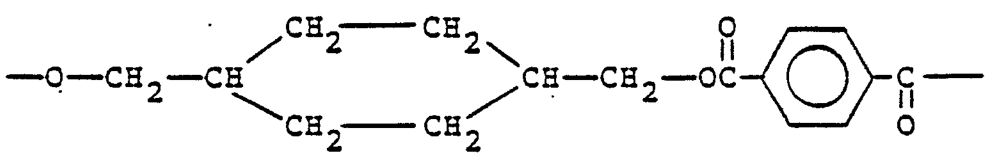

(II)

These polyesters can be produced by well known methods in the art such as those set forth in U.S. Pat. No. 2,901,466 which is incoporated herein by reference. The poly(1,4-cyclohexanedimethanol terephthalate) is commercially available from a number of sources.

The polyester resins of this invention can be prepared by condensing 1,4-cyclohexanedimethanol and minor amounts of other bifunctional glycols with the hexacarbocyclic dicarboxylic acid. These other bifunctional glycols include the polymethylene glycols containing from 2 to 10 or more carbon atoms such as ethylene glycol, butylene glycol, etc.

Examples of hexacarbocyclic dicarboxylic acids wherein the carboxy radicals are attached in para relationship to a hexacarbocyclic residue indicated by R in formula I include terephthalic acid, trans-hexahydroterephthalic acid, p,p'-sulfonyldibenzoic acid, 4,4'-diphenic acid, 4,4'-benzophenonedicarboxylic acid, 1,2-di(p-carboxyphenyl)ethane, 1,2-di(p-carboxyphenyl)ethene, 1,2-di(p-carbonoxyphenyl)-ethylene, 1,2-di(p-carboxyphenoxy)ethane, 4,4'-dicarboxydiphenyl phenyl ether, etc. and mixtures of these. All of these acids contain at least one hexacarbocyclic nucleus. Fused rings can also be present such as in 1,4-, 1,5-or 2,6-naphthalenedicarboxylic acid. The hexacarbocyclic dicarboxylic acids are preferably those containing a transcyclohexane nucleus or an aromatic nucleus containing from one to two benzene rings of which at least one has the usual benzenoid unsaturation. Of course, either fused or attached rings can be present. All of the compounds named in this paragraph come within the scope of this preferred group. The preferred dicarboxylic acid is terephthalic acid.

These polyesters should have an intrinsic viscosity between 0.40 and 2.0 dl./g. measured in a 60/40 phenoltetrachloroethane solution or a similar solvent at 25°-30°C. Especially prefered polyesters will have

an intrinsic viscosity in the range of 0.6 and 1.2 dl./g.

The amorphous or semi-crystalline resins of component (b) which may be used in combination with the polyester of component (a) include a wide variety of compounds, such as poly(phenylene ether), poly-(etherimide), poly(ether sulfone), poly(1,4-butylene terephthalate), polyamides, polyesters, copoly(etherimide esters), polyolefins, polyacrylates, and combinations thereof, or mixtures of any of the foregoing. Preferred are resins of poly(phenylene ether), poly(etherimide), poly(ether sulfone) and poly(1,4-butylene terephthalate).

The polyphenylene ethers (also known as polyphenylene oxides) used in the present invention are a well known class of polymers which have become bery useful commercially as a result of the discovery by Allan S. Hay of an efficient and economical method of production (See, for example, U.S. Patents 3,306,874 and 3,306,875, which are incorporated herein by reference). These polymers are available commercially from a number of sources. Numerous modifications and variations have since been developed but, in general, they are characterized as a class by the presence of arylenoxy structural units. The present invention includes all such variations and modifications, including but not limited to those described hereinafter.

The polyphenylene ethers favored for use in the practice of this invention generally contain structural units of the following formula:

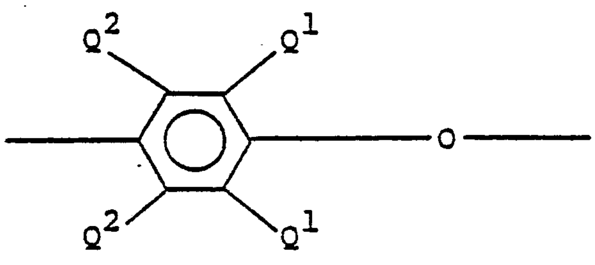

(III)

in which in each of these units independently each $Q^1$ is hydrogen, halogen, primary or secondary lower alkyl (i.e., alkyl containing up to 7 carbon atoms), phenyl, haloalkyl or aminoalkyl wherein at least two carbon atoms separate the halogen or nitrogen atom from the benzene ring, hydrocarbonoxy, or halohydrocarbonoxy wherein at least two carbon atoms separate the halogen and oxygen atoms; and each $Q^2$ is independently hydrogen, halogen, primary or secondary lower alkyl, phenyl, haloalkyl, hydrocarbonoxy or halohydrocarbonoxy as defined for $Q^1$. Examples of suitable primary lower alkyl groups are methyl, ethyl, n-propyl, n-butyl, isobutyl, n-amyl, isoamyl, 2-methylbutyl, n-hexyl, 2,3-dimethylbutyl, 2-, 3-or 4-methylpentyl and the corresponding heptyl groups. Examples of secondary lower alkyl groups are isopropyl, secbutyl and 3-pentyl. Preferably, any alkyl radicals are straight chain rather than branched. Most often, each $Q^1$ is alkyl or phenyl, especially $C_{1-4}$ alkyl, and each $Q^2$ is hydrogen.

Both homopolymers and copolymers are included. Suitable homopolymers are those containing, for example, 2,6-dimethyl-1,4-phenylene ether units. Suitable copolymers include random copolymers containing such units in combination with, for example, 2,3,6-trimethyl-1,4-phenylene ether units. Many suitable random copolymers, as well as homopolymers, are disclosed in the patent literature, including various Hay patents. Also contemplated are graft copolymers, including those prepared by grafting onto the polyphenylene ether chain such vinyl monomers as acrylonitrile and vinyl aromatic compounds (for example, styrene), and such polymers as polystyrenes and elastomers. Still other suitable polyphenylene ethers are the coupled polyphenylene ethers in which the coupling agent is reacted with the hydroxy groups of the two polyphenylene ether chains to increase the molecular weight of the polymer. Illustrative of the coupling agents are low molecular weight polycarbonates, quinones, heterocycles and formals.

The polyphenylene ether generally has a molecular weight (number average, as determined by gel permeation chromatography, whenever used herein) within the range of about 5,000 to 40,000. The intrinsic viscosity of the polymer is usually in the range of about 0.45 to 0.5 deciliters per gram (dl./g.), as measured in solution in chloroform at 25°C.

The polyphenylene ethers may be prepared by known methods, and typically by the oxidative coupling of at least one corresponding monohydroxyaromatic (e.g., phenolic) compound. A particularly useful and readily available monohydroxyaromatic compound is 2,6-xylenol (in which for the above formula each $Q^1$ is methyl and each $Q^2$ is hydrogen), the corresponding polymer of which may be characterized as a poly(2,6-dimethyl-1,4-phenylene ether).

The polyetherimides (PEI) also suitable for use as component (b) are also widely available from a number of commercial sources, e.g., ULTEM® 1010, General Electric Company. The PEIs can be prepared

following the method of Heath and Wirth, U.S. 3,847,867. The PEIs have the following chemically combined units,

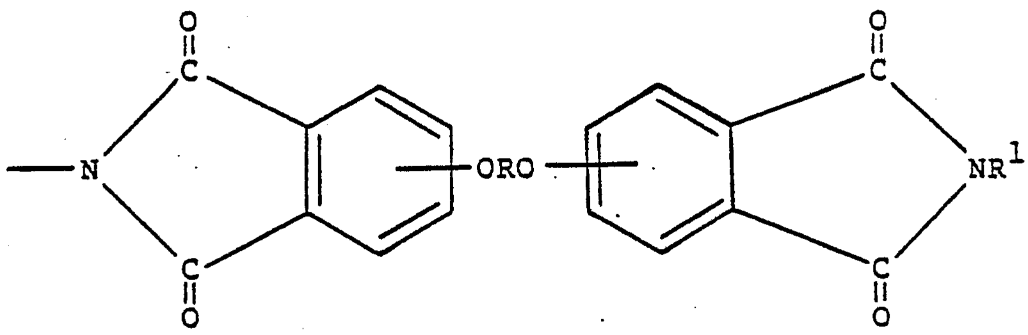

(IV)

wherein R and R' are illustrated in the '867 patent.

The poly(ethersulfones) or PES also useful as component (b) are a group of aromatic polymers which are sold commercially by a number of companies, e.g., VICTREX® 3600P, ICI Limited. As distinguished from the polysulfones which contain aliphatic iso-propylidene linkages, PES is wholly aromatic and has the following structural units

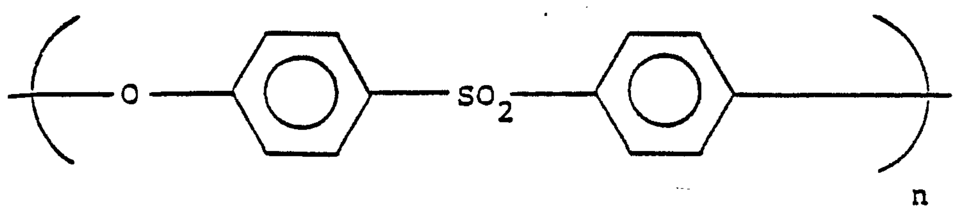

The high molecular weight, polymeric 1,4-butylene glycol terephthalaes also useful in this invention have repeating units of the general formula:

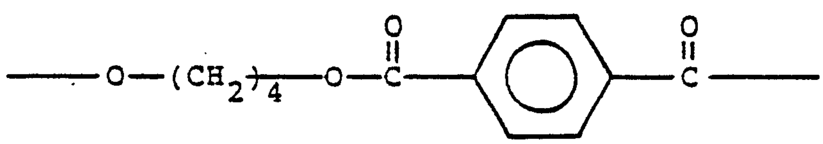

Also contemplated are mixtures of such esters with minor amount, e.g., from 0.5 to 2% by weight, of units derived from aliphatic or aromatic dicarboxylic acids and/or aliphatic polyols, e.g., glycols, i.e., copolyesters. These can also be made following the teachings outlined in Whinfield et al., U.S. 2,465,316 and Pengilly, U.S. 3,047,539. Poly(1,4-butylene terephthalate) is commercially available from several sources, e.g., VALOX® 315, General Electric Company.

Especially preferred polyesters for use as component (b) are poly(1,4-butylene terephthalae) resins. Special mention is made of this polyester because it crystallizes at an especially rapid rate.

Among the units which can be present in the copolyesters are those derived from aliphatic dicarboxylic acids, e.g., of up to about 50 carbon atoms, including straight and branched chain acids, such as adipic acid, dimerized $C_{16}$-$C_{18}$ unsaturated acids (which have 32 to 36 carbon atoms), trimerized such acids, and the like. Among the units in the copolyesters can also be minor amounts derived from aromatic dicarboxylic acids, e.g., of up to about 36 carbon atoms, such as isophthalic acids and the like. In addition to the 1,4-butylene glycol units, there can also be minor amounts of units derived from other aliphatic glycols and polyols, e.g., of up to about 50 carbon atoms, including ethylene glycol, propylene glycol, glycerol and the like. Such copolyesters can be made by techniques well known to those skilled in the art.

These polymeric 1,4-butylene glycol terephthalates have an intrinsic viscosity of at least 0.6 and preferably about 0.7 deciliters/gram as measured in o-chlorophenol, a 60/40 phenol tetrachloroethane mixture or a similar solvent at 25°-30°C. The upper limit is not critical but it will generally be about 2.5 dl./g. Especially preferred polyesters will have an intrinsic viscosity in the range of 0.7 to 1.3.

The reinforcing agent of component (c) may be selected from glass flakes, glass beads and fibers and

polymeric fibers and combinations thereof, reinforcing mineral fillers, e.g. wollastonite, etc.

The preferred reinforcing agents are of glass, and it is preferred to use fibrous glass filaments, e.g., OCF® P387F, available from Owens Corning Fiberglas Company.

The filamentous glass to be employed as reinforcement in the present compositions is well known to those skilled in the art and is widely available from a number of manufacturers. For compositions ultimately to be employed for electrical uses. It is preferred to use fibrous glass filaments comprisesd of lime-aluminum borosilicate glass that is relatively soda free. This is known as "E" glass. However, other glasses are useful where electrical properties are not so important, e.g., the low soda glass known as "C" glass. As will be exemplified in the next section, it is most preferred to use glass filaments known as G-filaments, which are P387F 1/8" chopped fibers, Owens Corning Fiberglass Co. The filaments are made by standard processes, e.g, by steam or air blowing, flame blowing and mechanical pulling. The preferred filaments for plastics reinforcement are made by mechanical pulling. The filament diameters range from about 0.00012 to 0.00075 inch.

The length of the glass filaments and whether or not they are bundled into fibers and the fibers bundled in turn to yarns, ropes or rovings, or woven into mats, and the like, are also not critical to the invention. However, in preparing the molding compositions, it is convenient to use the filamentous glass in the form of chopped strands of from about 1 to about 2 inches long. In articles molded from the instant compositions, on the other hand, even shorter lengths will be encountered because, during compounding, considerable fragmentation will occur. This is desirable, however, because the best properties are exhibited by thermoplastic injection molded articles in which the filament lengths lie between about 0.0005 and 0.125 (one-eight) inch.

Although it is only necessary to use a reinforcing amount of the reinforcing agent, from 1 to 60 parts by weight of the total amount of the composition may comprise the reinforcing agent. A preferred range is from 5 to 60 parts by weight and most preferably, 10-45 parts by weight.

The compositions of this invention can include, in addition to the filamentous glass reinforcements of the type described, mineral fillers in combination therewith, such as, e.g., talc, clay, silica, calcium silicate, mica and the like. These mineral fillers, if present, will generally comprise from about 2 to about 150 parts by weight per 100 parts of reinforcing agent (c).

Other ingredients, such as flow promoters, impact modifiers, antioxidants, stabilizers, dyes, pigments, plasticizers, flame retardants, drip retardants and the like can be added in conventional amounts for their conventionally employed purposes.

The crystallization promoting agents of component (d) raise the temperature of crystallization (Tcc) of the composition upon cooling from the melt, i.e., the temperature at which crystals first appear upon cooling of the melt is greater than the standard Tcc of the polyester, i.e., the Tcc of the polyester in the absence of a crystallization promoting agent. These agents are also known in the art as nucleating agents. Such agents act as "seeds" in the polyester melt and in conjunction with appopriate conditions during the manufacture of shaped articles, for example, by injection molding, accelerate the crystal formation in the desired manner in a process called nucleation. By raising the Tcc of the composition, crystallization promoting agents permit reduced cycling time and enable higher molecular weight polymers to be used in the molding process.

Suitable crystallization promoting agents in the present invention include talc, e.g, available under the trademark Talcron® from the Pfizer Company; clay and clay that has been surface treated with amino propylsilane, e.g., 0.5% A1100®, Union Carbide Company.

The amorphous or semi-crystalline resins of component (b) resin and the polyester resin derived from cyclohexanedimethanol are combinable with each other in all proportions, such as 1 to 99 parts by weight of poly(1,4-butylene terephthalate) and 99 to 1 parts by weight of a polyester derived from cyclohexanedimethanol. In general, however, compositions containing from about 95 to about 80 parts by weight of a polyester derived from cyclohexanedimethanol and from about 5 parts to about 20 parts by weight of the resin or resins of component (b) are preferred.

When calculated in terms of the total composition of components (a), (b), (c) and (d), the polyester derived from cyclohexanedimethanol may comprise from about 35 to about 99 parts by weight, component (b) from about 0 to about 30 parts by weight, component (c) from about 0 to about 60 parts by weight, and component (d) from about 1 to about 10 parts by weight. Where components (a), (c) and (d) are to be employed, i.e, absent any amorphous or semi-crystalline resins (component b), the polyester derived from cyclohexane dimethanol may comprise from about 40 to about 89 parts by weight, component (c) from about 10 to about 60 parts by weight, and component (d) from about 1 to about 10 parts by weight, based on the total composition of 100 parts by weight of (a), (c) and (d).

Where components (a) and (d) are employed, i.e, absent (b) and (c), the polyester derived from

cyclohexanedimethanol, component (a), may comprises from about 99 to about 90 parts by weight and component (d) may comprise from about 1 to about 10 parts by weight, based on the total composition of 100 parts by weight of (a) and (d).

The molding composition of this invention can be prepared by blending or mixing any of the combinations of components (a), (b), (c) and (d) as hereinabove described, and other optional components, as uniformly as possible employing any conventional blending means. Appropriate blending means, such as melt extrusion, batch melting and the like, are well known in the art. In one useful procedure, the blending procedure can be carried out at elevated temperatures above the melting point of the polyester and the crystallization in a suitable form as for example, granules, pellets and preferably powders, is added to the melt with vigorous stirring. Stirring is continued until a homogenous composition is formed. Blending temperatures and blending pressures, and the order of addition of the various components are not critical and may be varied as desired provided that a substantially homogenous composition results. the blending procedure can be carried out at elevated temperatures, in which case the polyester component is melted and the crystallization promoting agent is admixed therewith by vigorously stirring the melt. Similarly, the various solid components can be granulated, and the granulated components mixed dry in a suitable blender, or for example a Branbury mixer, as uniformly as possible, then melted in an extruder and expressed with cooling.

Alternatively, the composition of this invention can be formulated by dissolving the components in an appropriate inert solvent, after which the solvent is removed by evaporation, or other conventional solvent removing means are employed to provide the composition. The solvent is not critical, the only requirements being that it is inert to the components of the composition, and it is capable of solubilizing the various components, or at least forming dispersions thereof.

The molding compositions according to the invention can be usefully molded into articles of manufacture having valuable properties. Such articles can be produced by the conventional shaping processes, such as casting, injection molding and extruding. Examples of such molding are compon ents for technical equipment, apparatus castings, household equipment, sports equipment, components for the electrical and electronics industries and electrical insulations, car components, circuits, fibers and semi-finished products which can be shaped by machining.

## DESCRIPTION OF THE PREFERRED EMBODIMENTS

The examples that follow are not to be construed to limit the claims in any manner whatsoever.

In these examples, the following designations and/or abbreviations are used:

PCT --poly(cyclohexanedimethanol terephthalate)

Flame retardant --Poly(tribromo styrene) PYROCHEK® C68PB, Ferro Company

Flame retardant Synergist --(4:1) Sodium antimonate/SURLYN® 8920 (Dupont) concentrate M & I Company

All thermal properties of compositions were measured by differential scanning calorimety (DSC) using a Perkin-Elmer DSC IV, Intracooler I and Data Station. The scan profile was 50°C.-320°C. at 40°C./minute. Hold was two minutes. Recrystallization temperatures were measured upon cooling from 320° to 50°C. at -160°C./minute.

## EXAMPLES 1-3

Blends of PCT and crystallization promoting agents were mechanically mixed by tumbling in a 1 gallon stainless steel vat. The mixture was then extruded through a 3.5 oz, 75 ton Van Dorn molding machine (at 550°F) and injection molded into standard parts for testing. The compositions of the blends and the properties obtained are set forth in Table 1.

| TABLE 1: PCT Blends with Crystallization Promoting Agents | | | |
|---|---|---|---|
| Example | 1A* | 1 | 2 |
| Composition (parts by weight) | | | |
| PCT[a] | 100 | 95 | 95 |
| Talc[b] | -- | 5 | -- |
| Clay[c] | -- | -- | 5 |
| Properties | | | |
| Tch (°C.) | 147.8 | 142.7 | 143.6 |
| ΔHc (cal/g) | -5.9 | -3.9 | -5.6 |
| Glass Transition Temp., | | | |
| Tm (°C.) | 295.7 | 293.9 | 293.4 |
| ΔHc (cal/g) | 9.6 | 8.9 | 9.6 |
| Tcc (°C.) | 171 | 222 | 211.4 |
| ΔHc (cal/g) | -5.9 | -7.8 | -8.9 |

* Control

a EKTAR®3879 Eastman Chemical Products

b Talcron®MP4526, Pfizer Company

c Translink®, Englehard Company, clay surface treated with 0.5% amino propylsilane A1100® Union Carbide Company

EXAMPLES 3-5

Blended compositions of PCT, glass filament and crystallization promoting agents were prepared by tumbling for 3 to 5 minutes in a 25 gallon stainless steel vat. The blended mixture was then extruded on an HPM 2½" vented extruder using a 550°-600°F increasing temperature profile on the various heating zones. A vacuum greater than 20 inches of Hg was applied to the vented section of the extruder barrel. Pelletized extruded material was then dried for several hours at 250°F. and molded into ASTM test specimens using a 3.5 oz, 75 ton Van Dorn molding machine, with 550-570°F. barrel temperatures and 200°F mold temperature. The approximate cycle time was 30-40 seconds. Deflection temperature under load (DTUL) was measured according to ASTM D-648. The compositions used and the results obtained are given in Table 2.

TABLE 2: Glass Reinforced PCT Blends with Crystallization Promoting Agents

| Example | 3A* | 3 | 4 | 5 |
|---|---|---|---|---|
| Composition (parts by weight) | | | | |
| PCT[a] | 69.65 | 65.65 | 51.6 | 52.1 |
| G-Filament Glass[b] | 30.0 | 30.0 | 30.0 | 30.0 |
| Flame retardant | -- | -- | 12.4 | 12.0 |
| Flame retardant Synergist | -- | -- | 5.0 | 3.0 |
| Talc[c] | -- | 5.0 | -- | 2.0 |
| Stabilizers | 0.15 | 0.15 | 0.8 | 0.8 |
| Properties | | | | |
| DTUL, 264 psi, °F. | 473 | 514 | 410 | 496 |
| Tm, °C. | 291.7 | 293 | 290 | 292 |
| $\Delta$Hf, cal/g | 6.5 | 5.4 | 5.1 | 5.2 |
| Tcc, °C. | 177 | 219 | 165.7 | 217.1 |
| $\Delta$Hc, cal/g | -3.3 | -5.5 | -2.2 | -4.5 |

* Controls

a EKTAR®3879, Eastman Co.

b P387F® chopped fibers, Owens Fiberglas Company

c TALCRON®MP4526, Pfizer Company

The data above indicate that faster recrystallization rates for better moldability are obtained for glass-reinforced PCT compositions using crystallization promoting agents.

EXAMPLES 6-11

Glass-reinforced compositions of PCT, crystallization promoting agents, amorphous or semicrystalline polymers and conventional additives were prepared and molded into articles for testing by following the procedure of Examples 4-6. The compositions are set forth in Table 3.

TABLE 3: Glass-reinforced PCT Blends, Crystallization Promoting Agents and Amorphous/Semicrystalline Polymers

| Example | 6A* | 6 | 7 | 8 | 9 | 10 | 11 |
|---|---|---|---|---|---|---|---|
| Composition (parts by weight) | | | | | | | |
| PCT[a] | 65.6 | 55.6 | 45.6 | 55.6 | 45.6 | 55.6 | 60.6 |
| Poly(etherimide)[b] | -- | 10.0 | 20.0 | -- | -- | -- | -- |
| Poly(phenylene ether) | -- | -- | -- | 10.0 | 20.0 | -- | -- |
| Poly(ether sulfone)[c] | -- | -- | -- | -- | -- | 10.0 | -- |
| Poly(1,4-butylene terephthalate)[d] | -- | -- | -- | -- | -- | -- | 5.0 |
| Glass[e] | 30.0 | 30.0 | 30.0 | 30.0 | 30.0 | 30.0 | 30.0 |
| Talc[f] | 3.0 | 3.0 | 3.0 | 3.0 | 3.0 | 3.0 | 3.0 |
| Stabilizers and processing aid | 1.2 | 1.2 | 1.2 | 1.2 | 1.2 | 1.2 | 1.2 |

* Control

a EKTAR®3879, Eastman Chemical Compan Products

b ULTEM®1010, General Electric Company

c VICTREX®3600P, ICI Americas Company

d VALOX®315, General Electric Company

e P387F chopped fibers, Owens Corning Fiberglass Company

f TALCRON®MP4526, Pfizer Company

EXAMPLES 12-14

Glass reinforced compositions of PCT, crystallization promoting agent and a conventional additive here prepared by following the procedure of Examples 4-6. The compositions and results are set forth in Table 4.

TABLE 4. Glass Reinforced PCT Blends with Crystallization Promoting Agents

| Example | 12 | 13 | 14 |
|---|---|---|---|
| Composition(parts by weight) | | | |
| PCT[a] | 69.65 | 68.85 | 65.65 |
| G Filament glass[b] | 30.00 | 30.00 | 30.00 |
| Antioxidant | 0.15 | 0.15 | 0.15 |

TABLE 4: (Continued):

| Example | 12 | 13 | 14 |
|---|---|---|---|
| Epoxy[c] | -- | 1.00 | - |
| Talc[d] | -- | -- | 4.00 |
| Properties | | | |
| DTUL, 264 psi, °F | 473 | 461 | 514 |
| Tm, °C | 292 | 291 | 293 |
| ΔHf, cal/g | 6.5 | 6.0 | 5.4 |
| Tcc, °C | 177 | 163 | 219 |
| ΔHc, cal/g | -3.3 | -2.6 | -5.5 |

a EKTAR®3879, Eastman Chemical Products

b 93A chopped fiber, Certainteed Company

c DER®661, Dow Chemical Company

d TALCRON®MP4526, Pfizer Company

The above data indicate that faster recrystallization rates for better moldability are obtained for glass-reinforced PCT compositions using talc as a crystallization promoting agent.

EXAMPLES 15

Using the procedure followed in Examples 3-5, glass reinforced compositions of PCT, crystallization promoting agent, organic epoxies and conventional additives were prepared. The compositions and results are given in Table 5.

TABLE 5. 30% Glass Reinforced Flame Retardant PCT Blends with Crystallization Promoting Agent

| Example | 15 |
|---|---|
| Compositions(parts by weight) | |
| PCT[a] | 51.10 |
| Glass fibers[b] | 30.00 |
| Flame retardant | 12.50 |
| Fr Synergist | 3.50 |
| Stabilizer and processing aid | 1.2 |
| Talc[c] | 2.00 |
| Properties | |
| Heat Distortion, 264 psi, F | 496 |

| TABLE 5: (Continued): | |
|---|---|
| Example | 15 |
| Notched Izod, ft.lbs/in. | 1.2 |
| Unnotched Izod, ft.lbs./in. | 11.6 |
| Tensile Strength, psi | 19,600 |
| Flexural Strength, psi | 25,000 |
| Flexural modulus, MM psi | 1.00 |
| Specific gravity | 1.61 |

a EKTAR®3879, Eastman Chemical Company

b P387F chopped fibers, Owens Corning Fiberglass Company

c TALCRON®MP4526, Pfizer Company

The above results indicate that glass-reinforced PCT blends with excellent physical properties are to be obtained with talc as a crystallization promoting agent

EXAMPLE 16-18

Compositions of PCT, crystallization promoting agents, polyphenylene oxide and conventional additives here prepared in accordance with the procedure of Examples 3-5. These compositions and test results are set forth in Table 6.

Table 6. PCT Blends with Polyphenylene Oxide and Crystallization Promoting Agent

| Example | 16 | 17 | 18 |
|---|---|---|---|
| Compositions (parts by weight) | | | |
| PCT[a] | 73.60 | 48.60 | 69.60 |
| Poly(phenylene oxide)[b] | 25.00 | 50.00 | 25.00 |
| Stabilizers and processing aid | 1.2 | 1.2 | 1.2 |
| Talc[c] | -- | -- | 4.00 |
| Properties | | | |
| Heat distortion, 264 psi, °F | 200 | 344 | 375 |
| Heat distortion, 66 psi, °F | 192 | 194 | 248 |
| Notched Izod, ft.lbs/in. | 0.4 | 0.3 | 0.2 |
| Unnotched Izod, ft.lbs/in. | 7.6 | 7.0 | 4.0 |
| Tensile strength, psi | 6400 | 5600 | 5800 |
| Flexural Strength, psi | 10600 | 11600 | 7200 |
| Flexural strength, MM psi | 0.28 | 0.31 | 0.34 |

TABLE 6: (Continued):

| Example | 16 | 17 | 18 |
|---|---|---|---|
| Specific gravity | 1.17 | 1.13 | 1.20 |

a EKTAR®3879, Eastman Chemical Company

b NORYL®, General Electric Company

c TALCRON®MP4526, Pfizer Company

The data above indicates that blends of PCT and PPO can be processed using talc as a crystallization promoting agent into articles of superior heat resistance.

## EXAMPLE 19

Glass-reinforced compositions of PCT, PPO, crystallization promoting agent and conventional additives were prepared following the procedure of Examples 3-5. The compositions formulated and the test results obtained are given in Table 7.

TABLE 7. 30% Glass Reinforced Flame Retardant PCT/PPO Blends with Crystalline Promoting Agent

| Example | 19 |
|---|---|
| Composition (parts by weight) | |
| PCT[a] | 39.60 |
| PPO[b] | 10.00 |
| Glass fibers[c] | 30.00 |
| Flame retardant | 12.50 |
| FR synergist | 3.50 |
| Stabilizers and processing aid | 2.10 |
| Talc[d] | 2.00 |
| Properties | |
| Heat distortion, 264 psi, F | 480 |
| Notched Izodm ft.lbs/in | 1.2 |
| Unnotched Izod, ft.lbs/in | 10.0 |
| Tensile strength, psi | 18,100 |
| Flexural strength, psi | 26,000 |
| Flexural strength, psi | 1.22 |
| Specific gravity | 1.57 |

a EKTAR®3879, Eastman Chemical Products

b NORYL®, General Electric Company

c P387F chopped fibers, Owens Corning Fiberglass

d TALCRON®MP4526, Pfizer Company

The results above indicate that glass-reinforced flame retardant compositions of PCT and PPO can be produced in accordance with this invention using a crystallization promoting agent of talc.

The foregoing patents are incorporated herein by reference.

Many obvious variations will suggest themselves to those skilled in this art. For example, instead of using glass filaments, glass roving, wollastonite, mica, processed fibers, clay, and calcium carbonate can be used as reinforcing agents. Other conventional additives such as impact modifiers, antioxidants, heat stabilizers, such as organic epoxy compounds, and processing aids, plasticizers and flame retardants can be added in conventional amounts. All such variations are within the full scope of the appended claims.

**Claims**

1. An improved thermoplastic molding composition comprising:

(a) a polyester resin derived from cyclohexanedimethanol and a hexacarbocyclic dicarboxylic acid optionally in combination with

(b) an amorphous or semi-crystalline resin, optionally in combination with a reinforcing amount of

(c) a reinforcing agent, the improvement comprising said composition containing at least one

(d) crystallization promoting agent selected from talc and clay, or a mixture of any of them in an amount effective to cause rapid crystallization of said composition from the melt.

2. A thermoplastic molding composition as defined in Claim 1 wherein component (a) comprises from about 35 to about 99 parts by weight, component (b) comprises from about 0 to about 30 parts by weight, component (c) comprises from about 0 to about 60 parts by weight, and component (d) comprises from about 1 to about 10 parts by weight, based on 100 parts by weight of (a), (b), (c) and (d).

3. A thermoplastic molding composition as defined in Claim 2 wherein said polyester resin (a) has repeating units of the formula:

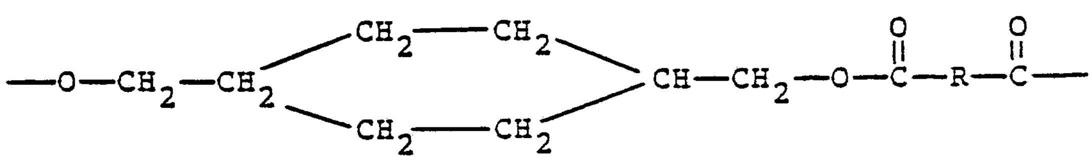

wherein the substituted cyclohexane ring is selected from the group comprising cis-, trans-isomers or mixtures thereof and R represents an organic radical of from about 6 to about 20 carbon atoms which is the decarboxylated residue derived from a hexacarbocyclic dicarboxylic acid.

4. A thermoplastic molding composition as defined in Claim 2 wherein the polyester resin has the repeating unit:

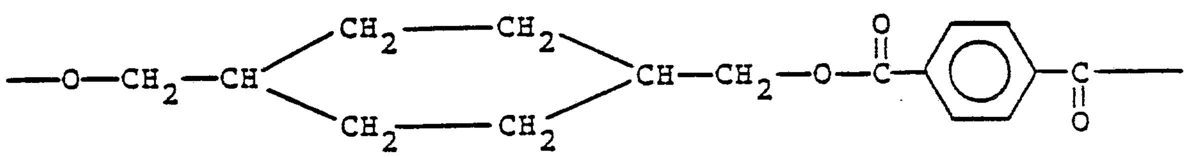

5. A thermoplastic molding composition as defined in Claim 2 wherein said amorphous or semi-crystalline resin (b) is selected from a poly(phenylene ether), a poly(etherimide), a poly(ether sulfone), a poly(1,4-butylene terephthalate) or a mixture of any of the foregoing.

6. A thermoplastic molding composition as defined in Claim 2 wherein said reinforcing agent (c) is selected from glass, mica, graphite or a mixture of any of the foregoing.

7. A thermoplastic molding composition as defined in Claim 6 wherein said reinforcing agent (c) is glass.

8. A thermoplastic molding composition as defined in Claim 2 wherein said crystallization promoting agent is talc.

9. A thermoplastic molding composition as defined in Claim 2 wherein said crystallization promoting agent is clay.

10. A thermoplastic molding composition as defined in Claim 9 wherein said clay is surface treated with amino propylsilane.

11. A thermoplastic molding composition as defined in Claim 1 wherein component (a) comprises from about 40 to about 89 parts by weight, component (b) comprises zero parts by weight, component (c) comprises from about 10 to about 60 parts by weight, and component (d) comprises from about 1 to about 10 parts by weight, based on 100 parts by weight of (a), (b), (c) and (d) combined.

12. A thermoplastic molding composition as defined in Claim 11 wherein component (a) has repeating of the formula:

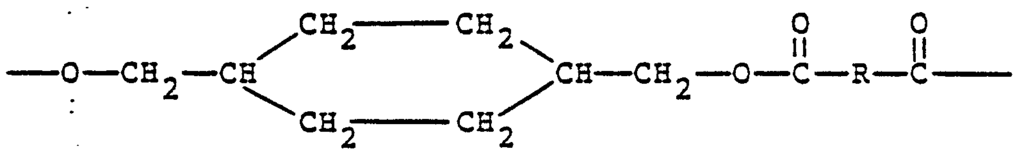

wherein the substituted cyclohexane ring is selected from the group comprising cis-, trans-isomers or mixtures thereof and R represents an organic radical of from about 6 to about 20 carbon atoms which is the decarboxylated residue derived from a hexacarboxyclic dicarboxylic acid.

13. A thermoplastic molding composition as defined in Claim 11 wherein component (a) has the repeating unit

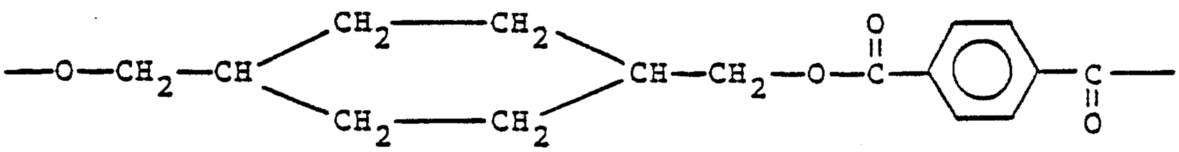

14. A thermoplastic molding composition as defined in Claim 11 wherein said crystallization promoting agent is talc.

15. A thermoplastic molding composition as defined in Claim 1 wherein component (a) comprises from about 99 to about 90 parts by weight, and component (d) comprises from about 1 to about 10 parts by weight, based on 100 parts by weight of (a) and (d) combined.

16. A thermoplastic molding composition as defined in Claim 15 wherein component (a) has repeating units of the formula:

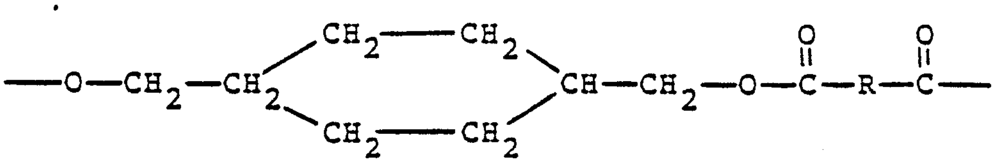

wherein the substituted cyclohexane ring is selected from the group comprising cis-, trans-isomers or mixtures therof and R represents an organic radical of from about 6 to about 20 carbon atoms which is the decarboxylated residue derived from a hexacarboxyclic dicarboxylic acid.

17. A thermoplastic molding composition as defined in Claim 15 wherein component (a) has the repeating unit

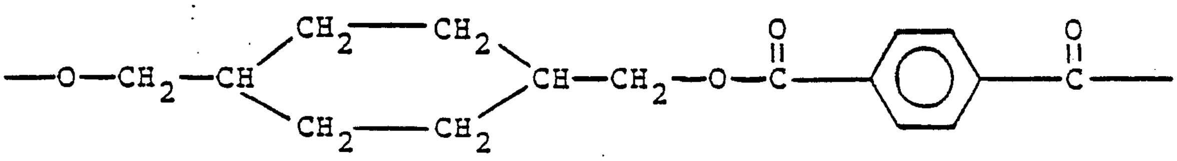

18. A thermoplastic molding composition as defined in Claim 15 wherein said crystallization promoting agent is talc.

19. A thermoplastic molding composition as defined in Claim 15 wherein said crystallization promoting agent is clay.

20. A thermoplastic molding composition as defined in Claim 19 wherein said clay is treated with aminopropylsilane.